# EUROPEAN PATENT APPLICATION

(11) **EP 3 699 725 A1**
(43) Date of publication of application: **26.08.2020**
(21) Application number: 19158644.5
(22) Date of filing: 21.02.2019
(51) Int. Cl.: G06F 1/16, B32B 1/02, B32B 3/06, H04M 1/02, H05K 5/00, H05K 5/02

(54) **PORTABLE ELECTRONIC DEVICE HOUSINGS HAVING TRANSLUCENT LAYERS AND METHODS OF MAKING THE SAME**

(71) Applicant: SABIC Global Technologies B.V., 4612 PX Bergen op Zoom (NL)
(72) Inventor: POWALE, Lakshmikant, 4612 PX Bergen op Zoom (NL); KULKARNI, Sandeep, 4612 PX Bergen op Zoom (NL); ALLESSIO, Timothy, 4612 PX Bergen op Zoom (NL)
(74) Representative: J A Kemp LLP

(57) **Abstract**

A portable electronic device housing (10c) can include a plate comprising a front face, a back face, and an edge. The plate can comprise a translucent layer (54) that defines at least a majority of the front face and, optionally, can have a laminate (58) disposed between the translucent layer and the back face such that the laminate underlies at least a majority of the translucent layer. A sidewall can be connected to the plate and include a polymeric connecting member (70) in contact with at least one of the back face and the edge of the plate. A rim (66) can be connected to the plate via the connecting member such that the rim defines at least a portion of the exterior of the housing, surrounds at least a majority of the edge of the plate, and extends outwardly of the back face of the plate.

## Description

### FIELD OF INVENTION

The present invention relates generally to portable electronic devices (PEDs) and more particularly, but without limitation, to PED housings comprising a plate that includes a translucent layer and methods of making the same.

### BACKGROUND

PEDs such as mobile phones, tablets, watches, laptops, and the like typically comprise a housing to contain and protect electronic components thereof. PED housings should have adequate stiffness and impact resistance to sustain impacts during everyday use, such as when the electronic device is dropped. And, at least a portion of the housing generally must be radiofrequency (RF) transparent to permit transmission of electromagnetic signals through the housing and/or wireless charging. Some housings incorporate metallic materials to achieve adequate strength; however, such materials may not be RF transparent and thus cannot be used to define all of the housing. Metallic housings may also impose restrictions on where certain PED components (e.g., antennas and/or inductive chargers) can be placed. There accordingly is a need in the art for PED housings that can provide suitable stiffness and impact resistance while providing RF transparency over large portions of the housing.

### SUMMARY

The present housings address the need in the art for adequately stiff, impact-resistant, and RF transparent housings with a plate including a translucent layer and, optionally, a supportive layer. The translucent layer can comprise glass and/or polycarbonate, and the supportive layer if present can comprise a laminate having one or more laminae, each including fibers dispersed within a matrix material, or a mixture of a matrix material and discontinuous fibers. Suitable fibers can include those that are relatively RF transparent, such as, for example, glass fibers, ceramic fibers, aramid fibers, and/or natural fibers, and suitable matrix materials can include, for example, a blend of polybutylene terephthalate (PBT) and polycarbonate (PC).

Such housings can include a sidewall that extends outwardly of a back face of the plate and surrounds at least a majority of an edge of the plate. The sidewall can comprise a composite material (e.g., any of those used for the supportive layer) and/or a metal. For example, the sidewall can include a rim comprising a metal and/or one or more laminates, and a connecting member formed of a polymeric material that connects the rim to the plate.

The materials of the translucent layer, supportive layer, and/or sidewall can promote stiffness and impact resistance while providing RF transparency to large portions of the housing.

The term "coupled" is defined as connected, although not necessarily directly, and not necessarily mechanically; two items that are "coupled" may be unitary with each other. The terms "a" and "an" are defined as one or more unless this disclosure explicitly requires otherwise. The term "substantially" is defined as largely but not necessarily wholly what is specified - and includes what is specified; e.g., substantially 90 degrees includes 90 degrees and substantially parallel includes parallel - as understood by a person of ordinary skill in the art. In any disclosed embodiment, the terms "substantially" and "about" may be substituted with "within [a percentage] of" what is specified, where the percentage includes 0.1, 1, 5, and 10 percent.

The terms "comprise" and any form thereof such as "comprises" and "comprising," "have" and any form thereof such as "has" and "having," and "include" and any form thereof such as "includes" and "including" are open-ended linking verbs. As a result, an apparatus that "comprises," "has," or "includes" one or more elements possesses those one or more elements, but is not limited to possessing only those elements. Likewise, a method that "comprises," "has," or "includes" one or more steps possesses those one or more steps, but is not limited to possessing only those one or more steps.

Any embodiment of any of the apparatuses, systems, and methods can consist of or consist essentially of - rather than comprise/include/have - any of the described steps, elements, and/or features. Thus, in any of the claims, the term "consisting of" or "consisting essentially of" can be substituted for any of the open-ended linking verbs recited above, in order to change the scope of a given claim from what it would otherwise be using the open-ended linking verb.

Further, a device or system that is configured in a certain way is configured in at least that way, but it can also be configured in ways other than those specifically described.

The feature or features of one embodiment may be applied to other embodiments, even though not described or illustrated, unless expressly prohibited by this disclosure or the nature of the embodiments.

Some details associated with the embodiments described above and others are described below.

### BRIEF DESCRIPTION OF THE DRAWINGS

The following drawings illustrate by way of example and not limitation. For the sake of brevity and clarity, every feature of a given structure is not always labeled in every figure in which that structure appears. Identical reference numbers do not necessarily indicate an identical structure. Rather, the same reference number may be used to indicate a similar feature or a feature with similar functionality, as may non-identical reference numbers.
**FIG. 1A** is a perspective view of a first embodiment of the present PED housings that has a plate and a sidewall that extends outwardly of the back face of the plate. The plate can comprise a translucent layer and a laminate.
**FIG. 1B** is an exploded view of the housing of FIG. 1A.
**FIGs. 1C** and **1D** are top and bottom views, respectively, of the housing of FIG. 1A.
**FIG. IE** is a partial cross-sectional end view of the housing of FIG. 1A, taken along line 1E-1E of FIG. 1C.
**FIG. 2A** is an exploded view of a second embodiment of the present PED housings in which the plate includes an intermediate layer, such as a masking layer or a foam layer, disposed between the translucent layer and the laminate.
**FIG. 2B** is a partial cross-sectional end view of the housing of FIG. 2A.
**FIG. 3A** is a perspective view of a third embodiment of the present PED housings in which the sidewall comprises a rim connected to the plate via a connecting member.
**FIGs. 3B** and **3C** are exploded and partial cross-sectional end views, respectively, of the housing of FIG. 3A.
**FIGs. 4A** and **4B** are cross-sectional views of a mold that can be used in some of the present methods to form a polymeric body that has a polymeric layer and a sidewall connected to and extending outwardly of the polymeric layer. The body can be coupled to a plate to form a housing.
**FIG. 4C** is a partial cross-sectional end view of a housing that can be made using the mold of FIG. 4A.
**FIGs. 5A** and **5B** depict methods for making ones of the present housings, the methods including forming a connecting member to connect a rim to a plate.
**FIG. 5C** is a partial cross-sectional end view of a housing that can be made according to the methods illustrated in FIGs. 5A and 5B.
**FIG. 6** is a top view of the mold of FIGs. 4A and 4B, illustrating an arrangement of mold injection ports that can facilitate fiber alignment and appropriate positioning of weldlines when injection molding at least a portion of the sidewall.

### DETAILED DESCRIPTION

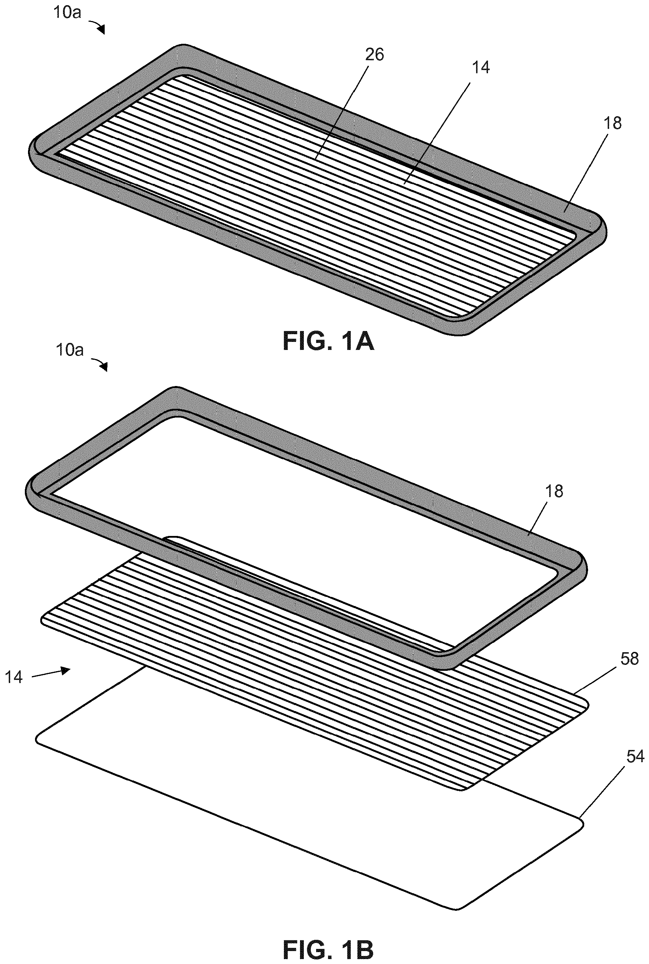

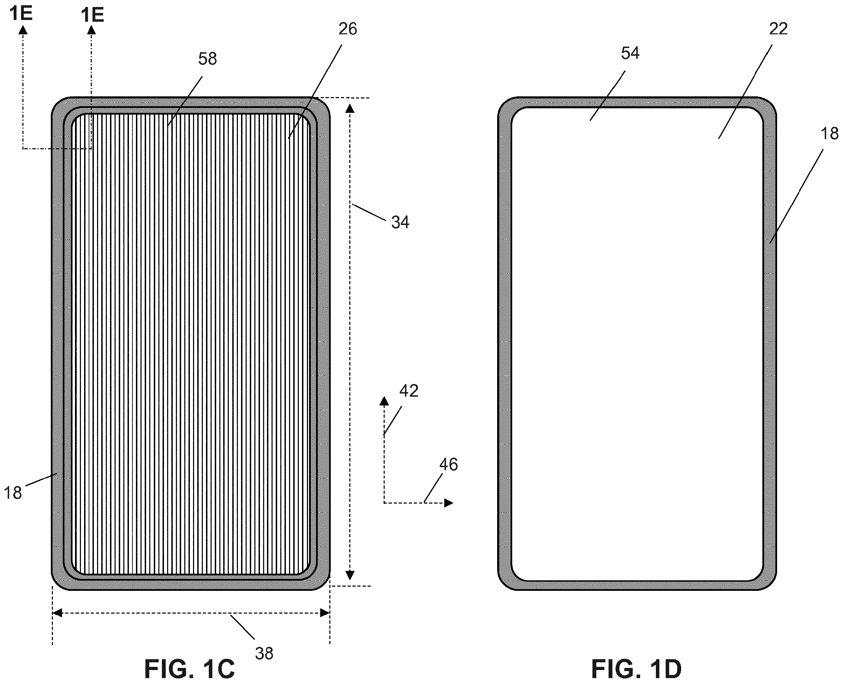

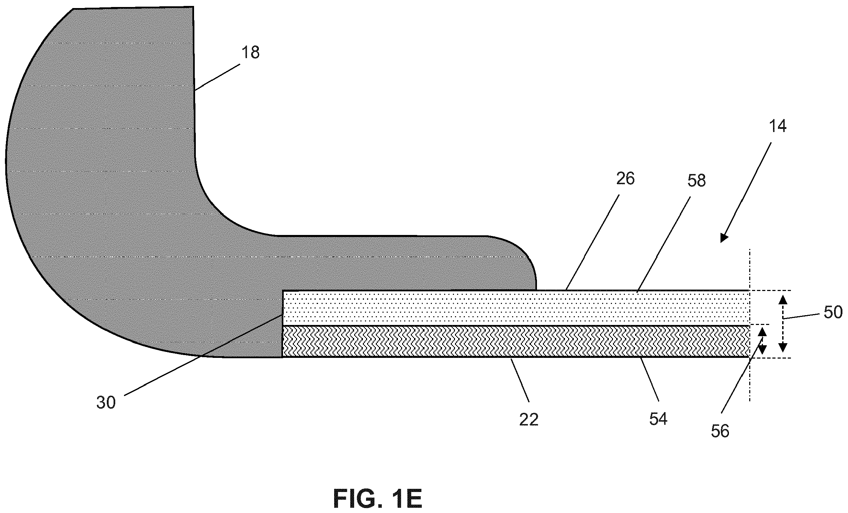

Referring to FIGs. 1A-1E, shown is a first embodiment 10a of the present PED housings. Housing 10a can comprise a plate 14 and a sidewall 18. Plate 14 can have opposing front and back faces, 22 and 26, respectively, and an edge 30. Sidewall 18 can be connected to plate 14 such that the sidewall surrounds at least a majority of (e.g., all of) edge 30 and extends outwardly of back face 22 of plate 14. Housing 10a can thereby define a cavity configured to receive electronic components of a PED, such as, for example, a logic board, processors (e.g., one or more CPUs, microcontrollers, field effect gate arrays, and/or the like), system memory, data storage devices (e.g., solid state or hard drive), speakers, wireless modems, antennas, batteries, and/or the like. Such components can be secured within housing 10a using any suitable means, such as, for example, screws, clips, rivets, and/or adhesive (e.g., a curable polymer adhesive). After the components of the device are received by housing 10a, a cover (e.g., a clear glass or polymeric cover through which an electronic display of the PED can be viewed) can be attached to the housing to enclose the cavity (e.g., with fasteners such as screws, clips, or rivets, or with an adhesive such as a curable polymer adhesive).

Housing 10a can have any suitable shape and size to promote ergonomics and to protect electronic components that are received therein. For example, housing 10a can have a maximum length 34, measured in a first direction 42, and a maximum width 38, measured in a second direction 46 that is perpendicular to the first direction, that is less than or equal to any one of, or between any two of: 90, 80, 70, 60, 50, or 40% of the maximum length. A minimum thickness 50 of plate 14, measured through each of its layer(s), can be greater than or equal to any one of, or between any two of: 0.50, 0.75, 1.00, 1.25, 1.50, 1.75, 2.00, 2.25, or 2.50 mm (e.g., between 0.50 and 2.50 mm or between 0.80 and 2.50 mm). Such a thickness can promote stiffness and impact resistance.

Plate 14 can comprise a translucent layer 54 that defines at least a majority of (e.g., all of) front face 22. As used herein, a "translucent layer" is a layer that can comprise any suitable material-including transparent materials-through which light can be transmitted. For example, translucent layer 54 can have a transmittance that is greater than or equal to any one of, or between any two of: 40, 50, 60, 70, 80, 90, or 99% (e.g., between 85 and 99%). To illustrate, translucent layer 54 can comprise glass, polycarbonate, an acrylate polymer (e.g., poly(methyl methacrylate)), polyethylene terephthalate, polyimide, polyethersulfone, polyethylene naphthalate, polyarylate, and/or the like (e.g., glass and/or polycarbonate). Certain materials (e.g., polymeric materials, such as polycarbonate) may be more shatter-resistant than glass. A minimum thickness 56 of translucent layer can be greater than or equal to any one of, or between any two of: 0.3, 0.4, 0.5, 0.6, 0.7, 0.8, 1.0, or 1.2 mm. Translucent layer 54 can include a film-in addition to a layer comprising one or more of the above materials-that defines at least a majority of (e.g., all of) front face 22 and can mitigate scratching of the layer.

Plate 14 can also, but need not, comprise a supportive layer 58 that is disposed between translucent layer 54 and back face 26; for example, the supportive layer can define at least a majority of (e.g., all of) the back face. Supportive layer 58 can be any of the composites described in further detail below, such as a polymer-fiber blend or a laminate, and can promote impact resistance for plate 14 and/or shatter resistance for translucent layer 54 (e.g., to protect PED components disposed in housing 10a).

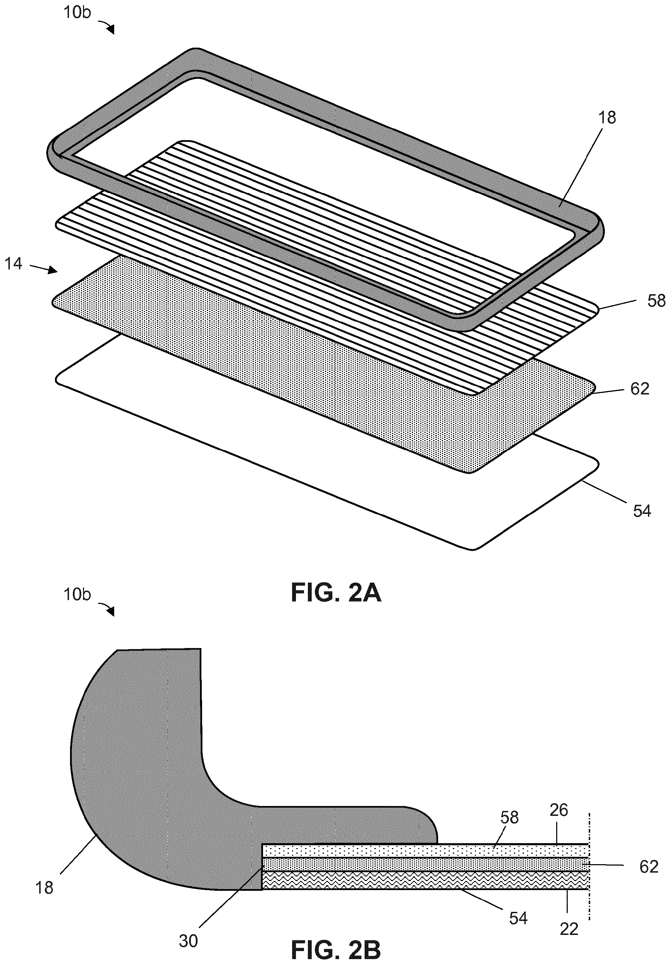

Referring additionally to FIGs. 2A and 2B, shown is a housing 10b in which plate 14 comprises an intermediate layer 62 in addition to translucent layer 54 and supportive layer 58. Intermediate layer 62 can be disposed beneath translucent layer 54. As used herein, when referring to the relative positions of components of plate 14, a component that is "beneath" or "underlies" another component is disposed closer to back face 26 than is the other component and a component that is "above" or "overlies" another component is disposed closer to front face 22 than is the other component. For example, intermediate layer 62 can be disposed between translucent layer 54 and supportive layer 58. Intermediate layer 62 can be a foam layer that can facilitate impact absorption to reduce the risk of translucent layer 54 shattering and/or of damage to components disposed in housing 10b. Alternatively, intermediate layer 62 can be a masking layer, such as a colored film, that may obscure supportive layer 58 and/or components disposed in housing 10b from view. Plate 14 can include intermediate layer 62 whether or not the plate includes supportive layer 58. Suitable films for a masking layer can include, for example, PBT, PC, or PBT/PC films. In some embodiments, plate 14 can include multiple intermediate layers, each disposed beneath translucent layer 54, such as a foam layer and a masking layer.

Translucent layer 54, supportive layer 58, and/or intermediate layer 62 can be connected in any suitable manner, such as via an adhesive (e.g., an epoxy, a silicon-based adhesive, an adhesive comprising thermoplastic polyurethane (TPU), or an adhesive comprising an ethylene-vinyl acetate copolymer (EVA)). The adhesive can comprise a material that resists degradation when exposed to chemicals that may be used in the PED and/or can be colored such that supportive layer 58 is not visible through translucent layer 54 (e.g., to improve housing aesthetics). Additionally or alternatively, translucent layer 54, supportive layer 58, and/or intermediate layer 62 can be connected via a snap fit (e.g., in which sidewall 18 mechanically secures the translucent, supportive, and/or intermediate layers) and/or overmolding.

Sidewall 18 and/or supportive layer 58 can comprise a composite material selected to achieve a suitable impact resistance, stiffness, and RF transparency (e.g., to permit wireless transmissions and/or wireless charging through plate 14). For example, each of sidewall 18 and supportive layer 58 can comprise a polymeric matrix material, such as, for example, a thermoplastic and/or thermoset material. A suitable thermoplastic material can include polycarbonate (PC), polybutylene terephthalate (PBT), or a combination thereof. A housing (e.g., 10a and 10b) can have improved crack resistance and impact resistance when the matrix material comprises a PBT/PC blend, compared to PC or PBT alone. PBT/PC matrix materials can be cost-effective and can provide a suitable fire resistance and color-neutrality for PED applications. For example, a PBT/PC matrix material can satisfy the UL 94 V-2 flammability standard, as described in UL 94 - Standard for Tests for Flammability of Plastic Materials for Parts in Devices and Appliances by UL Standards (6th ed., March 34, 2013), which is hereby incorporated by reference.

Suitable PCs whether or not included in a PBT/PC blend may be sustainable. Such a PC can be, for example, post-consumer or post-industrial recycled PC. Further, such a PC can be bio-sourced; to illustrate, the PC can be synthesized using bio-sourced monomers or pre-monomer chemical compounds (e.g., bio-benzene, bio-phenol, and/or the like). So too, may suitable PBTs be sustainable. For example, a suitable PBT may be one synthesized using monomers (e.g., terephthalic acid) recovered by chemically decomposing recycled polyethylene terephthalate, such as that from bottles (e.g., VALOX iQ™ resin, commercially available from SABIC). Sustainable PCs and/or sustainable PBTs can be included in a blend; an example of such a blend is a XENOY iQ™ resin, commercially available from SABIC.

In other embodiments the matrix material can comprise any suitable thermoplastic and/or thermoset composition. Suitable matrix materials (e.g., thermoplastic compositions) can include polycarbonates (e.g., blends of polycarbonate (such as, polycarbonate-polybutadiene blends, copolyester polycarbonates)), polystyrenes (e.g., copolymers of polycarbonate and styrene, polyphenylene ether-polystyrene blends), polyimides (e.g., polyetherimides), acrylonitrile-styrene-butadiene (ABS), polyalkylmethacrylates (e.g., polymethylmethacrylates), polyesters (e.g., copolyesters, polythioesters), polyolefins (e.g., polypropylenes and polyethylenes, high density polyethylenes, low density polyethylenes, linear low density polyethylenes), polyamides (e.g., polyamideimides), polyarylates, polysulfones (e.g., polyarylsulfones, polysulfonamides), polyphenylene sulfides, polytetrafluoroethylenes, polyethers (e.g., polyether ketones, polyether etherketones, polyethersulfones), polyacrylics, polyacetals, polybenzoxazoles (e.g., polybenzothiazinophenothiazines, polybenzothiazoles), polyoxadiazoles, polypyrazinoquinoxalines, polypyromellitimides, polyquinoxalines, polybenzimidazoles, polyoxindoles, polyoxoisoindolines (e.g., polydioxoisoindolines), polytriazines, polypyridazines, polypiperazines, polypyridines, polypiperidines, polytriazoles, polypyrazoles, polypyrrolidines, polycarboranes, polyoxabicyclononanes, polydibenzofurans, polyphthalides, polyacetals, polyanhydrides, polyvinyls (e.g., polyvinyl ethers, polyvinyl thioethers, polyvinyl alcohols, polyvinyl ketones, polyvinyl halides, polyvinyl nitriles, polyvinyl esters, polyvinylchlorides), polysulfonates, polysulfides, polyureas, polyphosphazenes, polysilazzanes, polysiloxanes, and a combination thereof.

For further example, the matrix material can include, but is not limited to, polycarbonate resins (e.g., LEXAN™ resins, commercially available from SABIC such as LEXAN™ XHT, LEXAN™ HFD, etc.), polyphenylene ether-polystyrene blends (e.g., NORYL™ resins, commercially available from SABIC), polyetherimide resins (e.g., ULTEM™ resins, commercially available from SABIC), polybutylene terephthalate-polycarbonate blends (e.g., XENOY™ resins, commercially available from SABIC), copolyestercarbonate resins (e.g. LEXAN™ SLX or LEXAN™ FST resins, commercially available from SABIC), acrylonitrile butadiene styrene resins (e.g., CYCOLOY resins, commercially available from SABIC), polyetherimide/siloxane resins (e.g., SILTEM™, commercially available from SABIC), polypropylene resins, for example, long glass fiber filled polypropylene resins (e.g., STAMAX™ resins, commercially available from SABIC), or a combination thereof. In some embodiments, the matrix material can include, but is not limited to, homopolymers and copolymers of a polycarbonate, a polyester, a polyacrylate, a polyamide, a polyetherimide, a polyphenylene ether, or a combination including at least one of the foregoing resins. The polycarbonate can include copolymers of polycarbonate (e.g., polycarbonate-polysiloxane, such as polycarbonate-polysiloxane block copolymer), linear polycarbonate, branched polycarbonate, end-capped polycarbonate (e.g., nitrile end-capped polycarbonate) blends of PC, such as PC/ABS blend, and combinations including at least one of the foregoing, for example a combination of branched and linear polycarbonate.

The composite material of at least one of (e.g., each of) sidewall 18 and supportive layer 58 can comprise a plurality of fibers dispersed within the matrix material. The composite can comprise a non-laminated polymer-fiber blend, e.g., in which the fibers are not arranged as consolidated lamina(e). For example, the fibers can be discontinuous or chopped fibers (e.g., fibers having a length that is less than or equal to any one of, or between any two of: 3.00, 2.75, 2.50, 2.25, 2.00, 1.75, 1.50, 1.25, 1.00, 0.75, 0.50, or 0.25 mm. The polymer-fiber blend can have a fiber volume fraction that is greater than or equal to any one of, or between any two of: 10, 20, 30, 40, 50, 60, or 70 (e.g., between 20 and 50% or between 40 and 50%) and a fiber weight fraction that is greater than or equal to any one of, or between any two of: 10, 20, 30, 40, 50, 60, or 70 (e.g., between 40 and 80% or between 60 and 80%). Increasing the fiber volume fraction and/or fiber weight fraction can increase the tensile modulus and/or tensile strength of the polymer-fiber blend.

In other embodiments, the composite material of sidewall 18 and/or supportive layer 58 can comprise one or more laminates, each having one or more laminae that have been consolidated (e.g., using heat and/or pressure) and that each comprise fibers (e.g., continuous fibers) dispersed in the matrix material. Each of the laminate(s) can include any suitable number of laminae, such as, for example, 1, 2, 3, 4, 5, 6, 7, 8, 9, 10, or more laminae. At least one, optionally all, of the lamina(e) can comprise a unidirectional lamina. For example, at least one of, or each of, the lamina(e) can have fibers aligned with first direction 42 (e.g., a 0-degree unidirectional lamina) or second direction 46 (e.g., a 90-degree unidirectional lamina). In some embodiments, at least one of the lamina(e) can have fibers that are aligned in a direction that is angularly disposed at an angle of at least 10 degrees relative to each of first direction 42 and second direction 46.

At least one of the lamina(e) can comprise a fabric in which the fibers define a woven structure (e.g., as in a lamina having a plane, twill, stain, basket, leno, mock leno, or the like weave). For example, for at least one of the lamina(e), the fibers can include a first set of fibers aligned in a first fiber direction and a second set of fibers aligned in a second fiber direction that is angularly disposed relative to the first fiber direction, where the first set of fibers is woven with the second set of fibers. Lamina(e) including fibers can have a pre-consolidation fiber volume fraction that is greater than or equal to any one of, or between any two of: 10, 20, 30, 40, 50, or 60 (e.g., between 35 and 60% or between 45 and 60%). In some embodiments, one or more laminae may not include fibers; such lamina(e) can, for example, comprise a sheet of a matrix material. In other embodiments, at least one of the lamina(e) can comprise discontinuous or chopped fibers.

The fibers of a composite (e.g., the polymer-fiber blend or laminate(s)) used for sidewall 18 and/or supportive layer 58 can include any suitable fibers, such as fibers that can promote stiffness and RF transparency. The fibers can be of a single type or of two or more types; for example, when the composite is a laminate having two or more laminae, at least one of the laminae can have fibers of a type that is distinct from the type of fibers in at least one other of the laminae. At least a portion, optionally all, of the housing (e.g., the portion of the housing configured for wireless charging or to receive an antenna) can be RF transparent. For example, to facilitate RF transparency, the fibers can be selected such that the composite of supportive layer 58 and/or sidewall 18 has a dielectric constant, at 10 GHz, that is greater than or equal to any one of, or between any two of: 4.0, 4.5, 5.0, or 5.5 (e.g., between 4.0 and 5.5). The fibers can comprise non-conductive fibers, including glass fibers, ceramic fibers, aramid fibers, and/or natural fibers.

Ceramic fibers that can provide a suitable combination of stiffness and RF transparency can include, for example, fibers comprising aluminum oxide. Other suitable ceramic fibers can include fibers comprising silicon carbide, silicon oxide, zirconium oxide, calcium oxide, magnesium oxide, aluminum silicate, calcium sulfate hemihydrate, boron oxide, boron carbide, and/or combinations thereof. Suitable natural fibers can comprise bamboo, sugar cane bagasse, jute, kenaf, flax, grass, sisal, hemp, coir, ramie, or abaca fibers.

Glass fibers that can provide a suitable combination of stiffness and RF transparency can include E-glass (e.g., alumino-lime silicate having less than 1%, by weight, alkali oxides) and/or S-glass (e.g., alumino silicate glass substantially free of calcium oxide). Other suitable glass fibers can include A-glass (e.g., alkali-lime glass substantially free of boron oxide), C-glass (e.g., alkali-lime glass with comparatively high boron oxide content), D-glass (e.g., borosilicate glass), R-glass (e.g., alumino silicate glass substantially free of magnesium oxide and calcium oxide), and/or E-glass derivatives that are fluorine-free and/or boron-free. The glass fibers can, but need not, be coated with a sizing composition to facilitate dispersion in the matrix material. The weight of the sizing composition can be greater than or equal to any one of, or between any two of: 0.1, 0.5, 1.0, 1.5, 2.0, 2.5, 3.0, 3.5, 4.0, 4.5, or 5.0% (e.g., between 0.1 and 2%) of the weight of the glass fibers. The glass fibers can have a nominal filament diameter of about 4.0 to about 35.0 micrometers. For example, E-glass fibers can have a nominal filament diameter of about 9.0 to about 30.0 micrometers. The fibers can be made by standard processes, e.g., by steam or air blowing, flame blowing and mechanical pulling. In some embodiments, the cross-section of the fibers can be non-circular.

Other suitable fibers can include carbon fibers, basalt fibers, quartz fibers, and/or fibers comprising iron, nickel, copper, boron, and/or one or more organic or synthetic polymers. For example, the fibers can comprise polyethylene terephthalate, polybutylene terephthalate and other polyesters, polyarylates, polyethylene, polyvinylalcohol, polytetrafluoroethylene, acrylic resins, high tenacity fibers with high thermal stability including aromatic polyamides, polyaramid fibers, polybenzimidazole, polyimide fibers such as polyimide 2080 and PBZ fiber; and polyphenylene sulfide, polyether ether ketone, polyimide, polybenzoxazole, aromatic polyimides or polyetherimides, and/or the like. The fibers can comprise any suitable form, such as, for example, single crystal fibers or "whiskers," needles, rods, tubes, strands, elongated platelets, lamellar platelets, ellipsoids, micro fibers, nanofibers and nontubes, elongated fullerenes, and/or the like. In some embodiments, the fibers can comprise conductive fibers. The fibers (e.g., if discontinuous) can be in an aggregate form (e.g., an aggregate having an aspect ratio greater than 1). Examples of fibers are described in "Plastic Additives Handbook, 5th Edition," Hans Zweifel, Ed., Carl Hanser Verlag Publishers (Munich 2001), which is hereby incorporated by reference.

The composite of sidewall 18 and/or supportive layer 58 can comprise one or more additives mixed within the matrix material. At least one of the additive(s) can comprise an impact modifier, a flow modifier, a non-fiber filler (e.g., a particulate polytetrafluoroethylene (PTFE), glass, carbon, mineral, or metal), an antioxidant, a heat stabilizer, a light stabilizer, an ultraviolet (UV) light stabilizer, a UV absorbing additive, a plasticizer, a lubricant, a release agent (e.g., a mold release agent), an adhesion promoter, an antistatic agent, an anti-fog agent, an antimicrobial agent, a colorant (e.g., a dye or pigment), a surface effect additive, a radiation stabilizer, a flame retardant, an anti-drip agent (e.g., a PTFE-encapsulated styrene-acrylonitrile copolymer (TSAN)), or a combination thereof. The total weight of the additives in the composite can be greater than or equal to any one of, or between any two of: 0.1, 1.0, 2.0, 3.0, 4.0, 5.0, 6.0, 7.0, 8.0, 9.0, or 10.0, (e.g., between 0.1 and 10%) of the weight of the matrix material. Additive(s) can be selected to achieve desired properties for the housing without a significant adverse effect on the mechanical properties of the composite, and can be soluble or non-soluble in the matrix material.

TABLES 1 and 2 set forth mechanical characteristics of polymer-fiber blends and laminae, respectively, that are suitable for use in some of the present housings.

**TABLE 1: Mechanical Properties of Illustrative Polymer-Fiber Blends**

| **Fiber Loading** | Low | Medium | High |
|---|---|---|---|
| **Fiber Type** | Ceramic (NEXTEL 610) | Ceramic (NEXTEL 610) | Ceramic (NEXTEL 610) |
| **Fiber Volume Fraction (%)** | 25 | 33 | 43 |
| **Fiber Weight Fraction (%)** | 50 | 60 | 70 |
| **Tensile Modulus (GPa)** | 26 | 31 | 36 |
| **Tensile Strength (MPa)** | 120 | 115 | 93 |
| **Tensile Elongation at Break (%)** | 1.7 | 1.7 | 1.5 |
| **Flexure Modulus (GPa)** | 20 | 23 | 27 |
| **Flexure Strength (MPa)** | 185 | 181 | 146 |

**TABLE 2: Mechanical Properties of Illustrative Laminae**

| | **Unidirectional Tape** | | | **Fabric** | |
|---|---|---|---|---|---|
| **Fiber Type** | S-Glass | Ceramic (NEXTEL 610) | Carbon Fiber | S-Glass | Ceramic (NEXTEL DF6) |
| **Fiber Tensile Modulus (GPa)** | 90 | 370 | 420 | - | - |
| **Fiber Volume Fraction (%)** | 47-51 | 36-38 | 46-50 | 53-58 | 50-53 |
| **Tensile Modulus (GPa)** | 37-40 | 135-145 | 180-190 | 30-32 | 100-110 |
| **Tensile Strength (MPa)** | 900-950 | 600-650 | 1200-1600 | 650-700 | 550-580 |
| **Tensile Elongation at break (%)** | 1.9-2.1 | 0.3-0.4 | 0.6-0.7 | 2.5-3 | 0.4-0.6 |

Sidewall 18 and supportive layer 58 can comprise the same material or different materials, such as any of the above-described composites. For example, as shown, sidewall 18 can comprise a polymer-fiber blend and supportive layer 58 can be a laminate, each having a PBT/PC matrix material. The polymer-fiber blend of sidewall 18 can include ceramic fibers and the lamina(e) of the laminate of supportive layer 58 can include glass fibers, ceramic fibers, aramid fibers, and/or natural fibers. As described in further detail below, sidewall 18 can be overmolded onto plate 14 to be connected thereto.

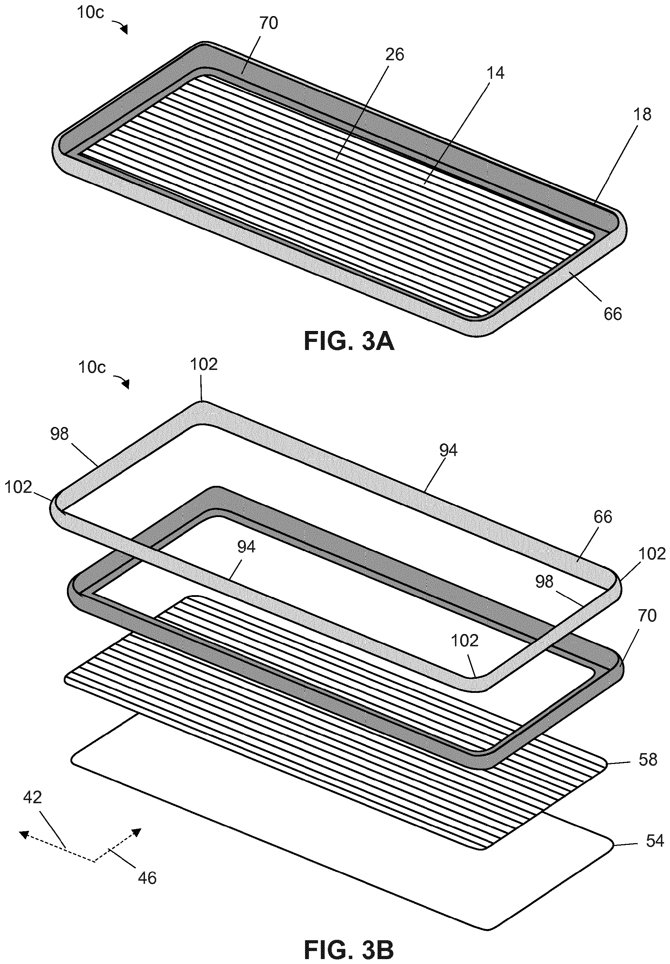

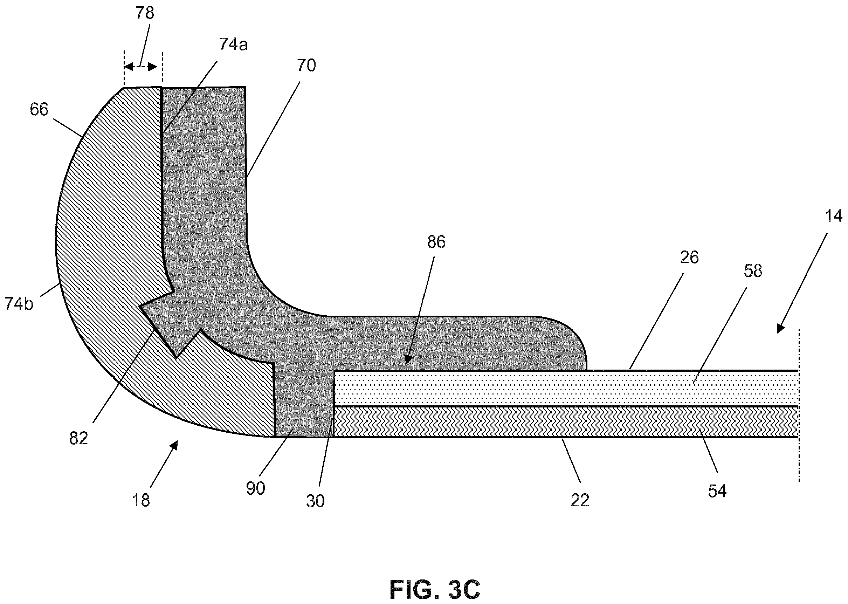

Additionally or alternatively, sidewall 18 can comprise a metal such as aluminum, titanium, stainless steel, or a combination thereof. Referring particularly to FIGs. 3A-3C, for example, shown is a housing 10c in which sidewall 18 has rim 66 that can comprise aluminum and/or one or more laminates (e.g., having glass fibers, ceramic fibers, aramid fibers, and/or natural fibers). Rim 66 can be connected to plate 14 in any suitable manner, such as via an adhesive, a snap-fit, and/or overmolding. As shown, sidewall 18 can comprise a connecting member 70 that connects rim 66 to plate 14. Rim 66 can have opposing interior and exterior surfaces 74a and 74b and connecting member 70 can be disposed on the interior surface; in other embodiments, however, the connecting member can be disposed on the exterior surface. To connect rim 66 to plate 14, connecting member 70 can be in contact with at least one of back face 26 and edge 30 of the plate. At least one of (e.g., both of) rim 66 and connecting member 70 can extend outwardly of back face 26 and surround at least a majority of (e.g., all of) edge 30. To promote aesthetics, ergonomics, impact resistance, and stiffness, a minimum thickness 78 of rim 66, measured between interior and exterior surfaces 74a and 74b, can be greater than or equal to any one of, or between any two of: 0.6, 0.8, 1.0, 1.5, 2.0, 2.5, 3.0, 3.5, or 3.7 mm (e.g., between 0.8 and 2.2 mm).

Connecting member 70 can comprise any material suitable for transferring loads between rim 66 and plate 14 to reduce the risk of damage to the housing (e.g., 10a-10c). For example, connecting member 70 can comprise any of the matrix materials (e.g., without fibers) and/or polymer-fiber blends described above. To promote bonding between connecting member 70 and plate 14, the matrix material of the connecting member can be the same as that of the supportive layer 58, if present. For example, connecting member 70 can comprise a PBT/PC matrix material, with or without discontinuous fibers dispersed therein.

The geometry of rim 66 and connecting member 70 can also facilitate load transfer and bonding. For example, interior surface 74a of rim 66 can define one or more recessed channels 82. A portion of connecting member 70 can be disposed in channel(s) 82, which increases the bonding area between connecting member 70 and rim 66 to improve the connection therebetween. Additionally or alternatively, interior surface 74a can define one or more protrusions. Connecting member 70 can define a recess 86 that receives plate 14 such that a portion 90 of the connecting member is coplanar with the plate and is disposed between the plate and the rim 66. Coplanar portion 90 of connecting member 70 can promote bonding and absorb loads during an impact to mitigate damage to the rim 66.

Rim 66 can have two lengthwise linear portions 94, two widthwise linear portions 98, and four corner portions 102. Lengthwise linear portions 94 can extend along first direction 42, and widthwise linear portions 98 can extend along second direction 46. Each of corner portions 102 can connect one of lengthwise linear portions 94 to one of widthwise linear portions 98. Rim 66 can thereby define a rectangular shape (e.g., having rounded corners).

Rim 66 can comprise a unitary structure (e.g., having one piece) or a non-unitary structure in which the rim comprises 2, 3, 4, 5, 6, 7, 8, 9, or more pieces that are coupled together. Each of the pieces of rim 66 can define at least a section of lengthwise linear portions 94, widthwise linear portions 98, and/or corner portions 102, and the pieces can comprise the same material or different materials. Each of the pieces can comprise, for example, a metal (e.g., aluminum), a laminate, or a polymer-fiber blend (e.g., any of those described above). A laminate of rim 66 can have at least one unidirectional lamina and can be positioned such that the fibers of the unidirectional lamina(e) are aligned in first direction 42 within lengthwise linear portions 94 and/or are aligned in second direction 46 within widthwise linear portions 98.

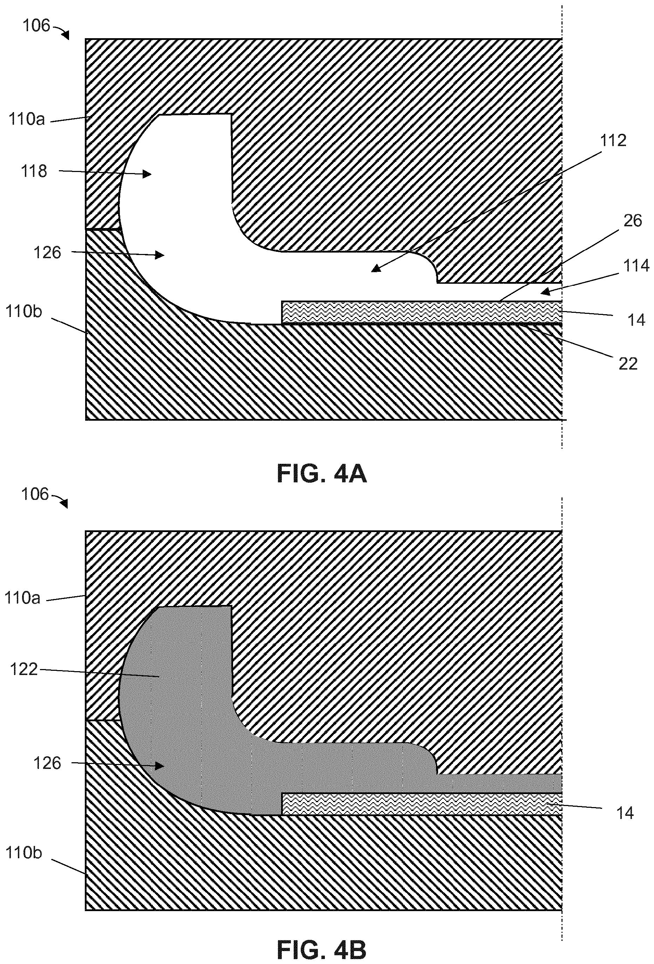

Referring to FIGs. 4A-4C, some of the present housings (e.g., 10a-10c) can be manufactured via injection molding. Manufacturing can be performed using a mold (e.g., 106) comprising two or more mold portions (e.g., 110a and 110b) that are movable between an open position and a closed position in which the mold portions cooperate to define a mold cavity (e.g., 112). Molding surfaces of the mold portions can be shaped such that the mold cavity comprises a planar cavity portion (e.g., 114) and a peripheral channel (e.g., 118) that projects outwardly from and surrounds at least a majority of (e.g., all of) the planar cavity portion. The planar cavity portion can be configured to receive a plate (e.g., 14) comprising a translucent layer (e.g., 54), a supportive layer (e.g., 58) (e.g., any of the laminates described above), and/or an intermediate layer (e.g., 62) (e.g., a foam layer or a masking film), optionally such that the plate occupies substantially all of a volume defined by the planar cavity portion. The mold cavity can be configured such that a portion of the plate (e.g., at least the outer edges thereof) can be disposed within the peripheral channel when the plate is received in the planar cavity portion.

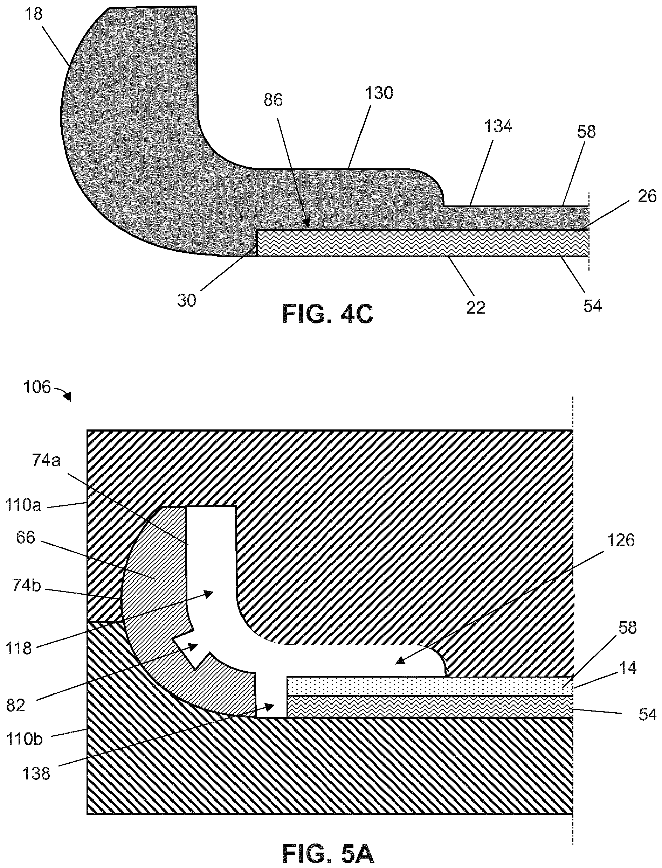

To form the housing, some methods comprise a step of placing the plate on at least one of the mold portions and moving the mold portions to the closed position such that the plate is disposed in the planar cavity portion (and, optionally, in the peripheral channel) (FIG. 4A). As shown, the plate does not comprise a supportive layer (e.g., such that the translucent layer or intermediate layer, if present, defines at least a majority of the back face (e.g., 26) of the plate); in other embodiments, however, the plate can include a supportive layer (e.g., a laminate) disposed between the translucent layer and the back face such that the laminate underlies at least a majority (e.g., all) of the translucent layer. The front face (e.g., 22) of the plate may be disposed on a molding surface of at least one of the molding portions and the plate may occupy less than all of the volume of the planar cavity portion (e.g., whether or not the plate includes the supportive layer). A moldable material (e.g., 122) comprising a polymeric matrix material with or without fibers (e.g., a PBT/PC blend that, optionally, comprises glass, ceramic, aramid, and/or natural fibers) can be injected into the mold (FIG. 4B). For example, injecting can be performed such that the moldable material is introduced into a volume (e.g., 126) defined by at least a portion of the molding surfaces and the plate; the volume can include at least a portion of the volume defined by the planar cavity portion. The moldable material can set to form a body (e.g., 130) that comprises a polymeric layer (e.g., 134) and a sidewall (e.g., 18) that is connected to and extends outwardly of the polymeric layer (FIG. 4C). At least in part because the plate is partially disposed in the peripheral channel, the polymeric layer and sidewall can cooperate to define a recess (e.g., 86). The plate can be disposed in the recess such that the back face of the plate faces the polymeric layer, the polymeric layer underlies at least a majority of the plate, and the sidewall surrounds at least the majority of an edge (e.g., 30) of the plate. The polymeric layer, for example, can define a supportive layer of the plate that may be unitary with at least a portion of the sidewall.

While, as shown, the above-described molding process is performed while the plate is disposed within the mold (e.g., such that the body is formed and coupled to the plate in the same steps), in other embodiments the body can be formed in the mold without the plate disposed therein. In such methods, the molding surfaces of the mold portions can be shaped such that the resulting body has substantially the same shape as described above. The body can be removed from the mold and the plate can thereafter be disposed and secured in the body's recess (e.g., via an adhesive and/or a snap-fit) to make the housing.

Referring to FIGs. 5A-5C, for some housings, the injection molding process can be performed such that the moldable material does not form a supportive layer and/or does not form all of the sidewall. For example, the plate whether or not the plate includes a supportive layer and/or intermediate layer in addition to the translucent layer can occupy substantially all of a volume defined by the planar cavity portion such that the injected moldable material is constrained to the peripheral channel (e.g., such that a polymeric layer underlying at least a majority of the plate is not formed). Additionally or alternatively, the peripheral channel can be configured to receive a rim (e.g., 66), optionally such that an exterior surface (e.g., 74b) of the rim is disposed on a molding surface of at least one of the molding portions. The moldable material can form a polymeric connecting member (e.g., 70) that connects the rim to the plate.

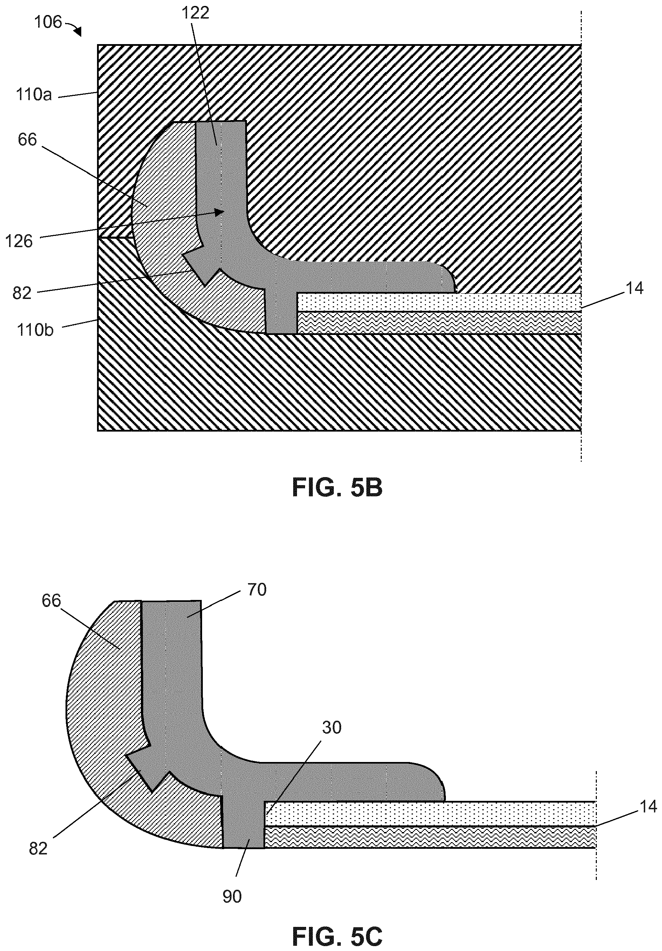

To make such housings, some methods comprise a step of, in addition to disposing the plate in the planar cavity portion, placing the rim on at least one of the mold portions such that the rim is disposed in the peripheral channel (FIG. 5A). The moldable material can be injected into the peripheral channel such that the moldable material enters the volume defined by an interior surface (e.g., 74a) of the rim, a molding surface of at least one of the mold portions, and the plate (FIG. 5B). The moldable material can be set to form the connecting member that couples the rim to the plate. The rim and resulting connecting member can define the sidewall that extends outwardly of the back face of the plate and surrounds at least a majority of (e.g., all of) the edge of the plate (FIG. 5C). Optionally, the plate can be heated before the injecting.

In other embodiments, the sidewall can be produced without a rim (e.g., such that the sidewall is substantially the same as that produced in the process of FIGs. 4A-4C) while the plate occupies substantially all of the volume defined by the planar cavity portion (e.g., such that the moldable material does not form a polymeric layer that underlies at least a majority of the plate). And, in other embodiments, the sidewall can be produced with a rim while the plate occupies less than all of the volume defined by the planar cavity portion (e.g., such that moldable material forms both the connecting member and a polymeric layer that underlies at least a majority of the plate).

As shown, the plate includes the translucent layer and a supportive layer that is a laminate. The laminate and the rim can be manufactured prior to the molding. For example, the laminate can be formed using a variety of techniques, including but not limited to bladder molding of pre-preg sheets, compression molding of pre-preg sheets, autoclave or vacuum bag molding of prepreg sheets, mandrel molding, wet layup molding of neat sheets, filament winding molding in which fiber bundles are pulled through a wet bath resin and wound over a mandrel, pultrusion or extrusion molding in which fibers saturated with wet resin are pulled or extruded through a die, or resin transfer molding and vacuum assisted resin transfer molding in which fabrics are placed into a mold and injected with fluid resin under pressure.

The rim can be treated and/or can define one or more features to facilitate bonding between the rim and the connecting member. For example, as described above, for some housings the interior surface of the rim can define one or more recessed channels (e.g., 82). During the injecting, the moldable material can enter the recessed channel(s) such that, when the matrix material is set, a portion of the connecting member is disposed therein, which can increase the bonding area between the moldable material and the rim. Additionally or alternatively, the interior surface of the rim can define one or more protrusions. In some methods, to facilitate bonding, an adhesive can be applied to the interior surface of the rim and/or the interior surface can be etched (e.g., mechanically and/or chemically), laser engraved, plasma treated, and/or the like prior to the injecting.

The rim and the plate can be positioned such that a portion (e.g., 138) of the volume in the peripheral channel is coplanar with the plate and is defined between the rim and the plate. The moldable material can enter the coplanar volume during injecting such that the formed connecting member defines a recess (e.g., 86) that receives the plate and comprises a portion (e.g., 90) that is coplanar with the plate and is disposed between the plate and the rim. As described above, the recess and coplanar portion can increase the bonding area and can facilitate load absorption.

The moldable material, when comprising fibers and/or additives, can comprise any suitable proportion of the fibers and/or additives, such as any of those described above. The matrix material and fibers can be mixed prior to introduction into the mold cavity. For example, the matrix material can be mixed with the discontinuous fibers when the matrix material is in a powdered form. The mixture can be fed through an extruder to form the moldable material. Optionally, the fibers can be unchopped when mixed; the mixing, extruding, and/or injecting can shorten the fibers to form discontinuous (e.g., chopped) fibers. Alternatively, the fibers can be compounded into a masterbatch with the matrix material and thereafter fed into the extruder. The extruder can be configured to operate at a temperature higher than that necessary to cause the moldable material to flow. The extrudate can be quenched in a water batch and pelletized.

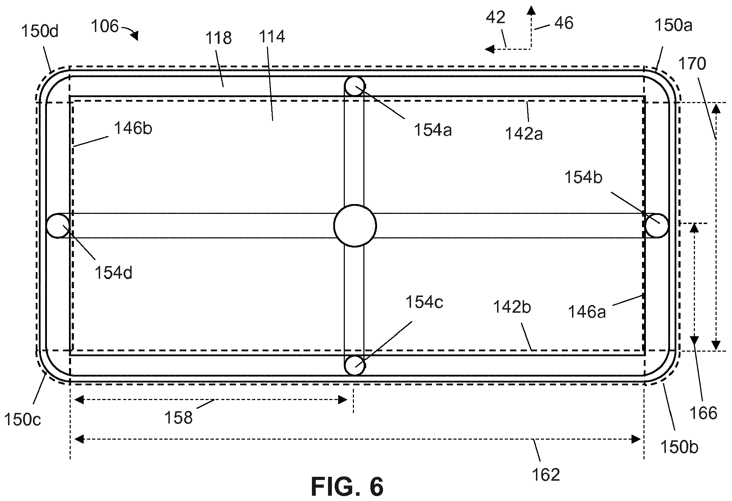

Referring to FIG. 6, injection molding can be performed to facilitate alignment of the fibers of the moldable material and to position weldlines away from the corners of the housing, thereby promoting strength. To illustrate, the peripheral channel can comprise two lengthwise linear channel portions (e.g., 142a and 142b) aligned in a first direction (e.g., 42) and two widthwise linear channel portions (e.g., 146a and 146b) aligned in the second direction (e.g., 46) that is perpendicular to the first direction. The peripheral channel can also comprise four channel corner portions (e.g., 150a-150d), each of which connects one of the lengthwise linear channel portions to one of the widthwise linear channel portions such that the channel portions are in fluid communication. The mold can comprise one or more injection ports (e.g., 154a-154d) through which the moldable material can be introduced into mold cavity.

To facilitate fiber alignment and appropriate weldline positioning when molding the connecting member and/or sidewall, one or more of the injection port(s) can be positioned at and be in fluid communication with one of the lengthwise linear channel portions or one of the widthwise linear channel portions such that, during the injecting, the moldable material is introduced into the lengthwise or widthwise linear channel portion from the injection port. To promote fiber alignment and appropriate positioning of the weldlines, each of the injection port(s) can be spaced apart from the channel corner portions. For example, each of the injection port(s) that is positioned at one of the lengthwise linear channel portions can be spaced apart from one of the widthwise linear channel portions by a distance (e.g., 158), measured in the first direction, that is greater than or equal to or between any two of 10%, 20%, 30%, 40%, 50%, or more (e.g., between 40% and 60%) of a length (e.g., 162) of the lengthwise linear channel portion. Each of the injection port(s) positioned at one of the widthwise linear channel portions can be spaced apart from one of the lengthwise linear channel portions by a distance (e.g., 166), measured in the second direction, that is greater than or equal to or between any two of 10%, 20%, 30%, 40%, 50%, or more (e.g., between 40% and 60%) of a width (e.g., 170) of the widthwise linear channel portion. As shown, the mold comprises four injection ports, each positioned at and in fluid communication with a respective one of the lengthwise and widthwise linear channel portions; in other embodiments, however, the mold can comprise any suitable number of injection ports, such as, for example, greater than or equal to or between any two of 1, 2, 3, 4, 5, 6, 7, 8, 9, 10, or more injection ports. Providing additional injection ports can facilitate the manufacture of thinner sidewalls.

Injecting can be performed by introducing the moldable material through each of the injection port(s) (and, e.g., into the lengthwise and widthwise linear channel portions) sequentially. Sequential introduction of the moldable material can mitigate the presence of multiple flow fronts which may produce weak spots where the flow fronts meet. In other embodiments, however, the moldable material can be introduced through each of the injection port(s) concurrently. The arrangement of the injection port(s) (e.g., as shown) can facilitate fiber alignment (e.g., along the first direction in each of the lengthwise linear channel portions and along the second direction in each of the widthwise linear channel portions), which can reduce shrinkage and warpage.

Some of the present PED housings comprise a plate including a front face, a back face, and an edge, wherein the plate comprises a translucent layer that defines at least a majority of the front face, and a sidewall connected to the plate and including a polymeric connecting member in contact with at least one of the back face and the edge of the plate and a rim connected to the plate via the connecting member such that the rim defines at least a portion of the exterior of the housing, surrounds at least a majority of the edge of the plate, and extends outwardly of the back face of the plate.

In some PED housings, the plate comprises a laminate disposed between the translucent layer and the back face such that the laminate underlies at least a majority of the translucent layer, the laminate including fibers dispersed within a polymeric matrix material. In some PED housings, the fibers of the laminate of the plate comprise glass, ceramic, aramid, and/or natural fibers.

In some PED housings, the rim comprises a metal. In some PED housings, the rim comprises one or more laminates, each including fibers dispersed within a polymeric matrix material. In some PED housings, the fibers of at least one of the laminate(s) of the rim comprise glass, ceramic, aramid, and/or natural fibers.

Some of the present PED housings comprise a plate including a front face, a back face, and an edge, wherein the plate comprises a translucent layer that defines at least a majority of the front face, and a laminate disposed between the translucent layer and the back face such that the laminate underlies at least a majority of the translucent layer, the laminate including glass, ceramic, aramid, and/or natural fibers dispersed within a polymeric matrix material, and a sidewall connected to the plate such that the sidewall surrounds at least a majority of the edge of the plate and extends outwardly of the back face of the plate.

In some PED housings, the translucent layer comprises glass and/or polycarbonate. In some PED housings, the plate includes a masking layer disposed beneath the translucent layer. In some PED housings, the translucent layer of the plate is connected to the laminate of the plate via an adhesive. In some PED housings, the plate includes a foam layer disposed between the translucent layer and the laminate.

Some of the present methods of making a PED housing comprise injecting a polymeric material into a mold such that the polymeric material defines a body comprising a polymeric layer, and a sidewall connected to and extending outwardly of the polymeric layer, wherein the polymeric layer and the sidewall cooperate to define a recess, and disposing a plate within the recess of the body, the plate including a front face, a back face, and an edge, wherein the plate comprises a translucent layer that defines at least a majority of the front face, wherein disposing the plate within the recess of the body is performed such that the back face of the plate faces the polymeric layer, the polymeric layer underlies at least a majority of the plate, and the sidewall surround at least a majority of the edge of the plate. In some methods, the plate is disposed within the mold when the polymeric material is injected into the mold.

In some methods, the plate comprises a laminate disposed between the translucent layer and the back face such that the laminate underlies at least a majority of the translucent layer, the laminate including fibers dispersed within a polymeric matrix material. In some methods, the polymeric material comprises glass, ceramic, aramid, and/or natural fibers.

The above specification and examples provide a complete description of the structure and use of illustrative embodiments. Although certain embodiments have been described above with a certain degree of particularity, or with reference to one or more individual embodiments, those skilled in the art could make numerous alterations to the disclosed embodiments without departing from the scope of this invention. As such, the various illustrative embodiments of the methods and systems are not intended to be limited to the particular forms disclosed. Rather, they include all modifications and alternatives falling within the scope of the claims, and embodiments other than the one shown may include some or all of the features of the depicted embodiment. For example, elements may be omitted or combined as a unitary structure, and/or connections may be substituted. Further, where appropriate, aspects of any of the examples described above may be combined with aspects of any of the other examples described to form further examples having comparable or different properties and/or functions, and addressing the same or different problems. Similarly, it will be understood that the benefits and advantages described above may relate to one embodiment or may relate to several embodiments.

The claims are not intended to include, and should not be interpreted to include, means-plus- or step-plus-function limitations, unless such a limitation is explicitly recited in a given claim using the phrase(s) "means for" or "step for," respectively.

## Claims

1. A portable electronic device (PED) housing comprising:
a plate including:
a front face;
a back face; and
an edge;
wherein the plate comprises a translucent layer that defines at least a majority of the front face; and
a sidewall connected to the plate and including:
a polymeric connecting member in contact with at least one of the back face and the edge of the plate; and
a rim connected to the plate via the connecting member such that the rim:
defines at least a portion of the exterior of the housing;
surrounds at least a majority of the edge of the plate; and
extends outwardly of the back face of the plate.

2. The PED housing of claim 1, wherein the rim comprises a metal.

3. The PED housing of claim 1 or 2, wherein the rim comprises one or more laminates, each including fibers dispersed within a polymeric matrix material.

4. The PED housing of claim 3, wherein the fibers of at least one of the laminate(s) of the rim comprise glass, ceramic, aramid, and/or natural fibers.

5. The PED housing of any of claims 1-4, wherein the plate comprises a laminate disposed between the translucent layer and the back face such that the laminate underlies at least a majority of the translucent layer, the laminate including fibers dispersed within a polymeric matrix material.

6. The PED housing of claim 5, wherein the fibers of the laminate of the plate comprise glass, ceramic, aramid, and/or natural fibers.

7. A portable electronic device (PED) housing comprising:
a plate including:
a front face;
a back face; and
an edge;
wherein the plate comprises:
a translucent layer that defines at least a majority of the front face; and
a laminate disposed between the translucent layer and the back face such that the laminate underlies at least a majority of the translucent layer, the laminate including glass, ceramic, aramid, and/or natural fibers dispersed within a polymeric matrix material; and
a sidewall connected to the plate such that the sidewall:
surrounds at least a majority of the edge of the plate; and
extends outwardly of the back face of the plate.

8. The PED housing of any of claims 5-7, wherein the translucent layer of the plate is connected to the laminate of the plate via an adhesive.

9. The PED housing of any of claims 5-8, wherein the plate includes a foam layer disposed between the translucent layer and the laminate.

10. The PED housing of any of claims 1-9, wherein the plate includes a masking layer disposed beneath the translucent layer.

11. The PED housing of any of claims 1-10, wherein the translucent layer comprises glass and/or polycarbonate.

12. A method of making a portable electronic device (PED) housing, the method comprising:
injecting a polymeric material into a mold such that the polymeric material defines a body comprising:
a polymeric layer; and
a sidewall connected to and extending outwardly of the polymeric layer;
wherein the polymeric layer and the sidewall cooperate to define a recess; and disposing a plate within the recess of the body, the plate including:
a front face;
a back face; and
an edge;
wherein the plate comprises a translucent layer that defines at least a majority of the front face;
wherein disposing the plate within the recess of the body is performed such that:
the back face of the plate faces the polymeric layer;
the polymeric layer underlies at least a majority of the plate; and
the sidewall surrounds at least a majority of the edge of the plate.

13. The method of claim 12, wherein the plate is disposed within the mold when the polymeric material is injected into the mold.

14. The method of claim 12 or 13, wherein the plate comprises a laminate disposed between the translucent layer and the back face such that the laminate underlies at least a majority of the translucent layer, the laminate including fibers dispersed within a polymeric matrix material.

15. The method of any of claims 12-14, wherein the polymeric material comprises glass, ceramic, aramid, and/or natural fibers.
